# EUROPEAN PATENT SPECIFICATION

(11) **EP 4 440 815 B1**
(45) Date of publication and mention of the grant of the patent: **28.01.2026**
(21) Application number: 22829613.3
(22) Date of filing: 29.11.2022
(51) Int. Cl.: B29C 51/22, B29C 53/04, B29C 53/28, B29C 51/08, B29L 31/18, B29K 27/06, F28B 1/00, B29L 16/00, B29C 43/22

(54) **APPARATUS FOR FORMING A PANEL**
VORRICHTUNG ZUR HERSTELLUNG EINER PLATTE
APPAREIL POUR FORMER UN PANNEAU

(30) Priority: 01.12.2021 IT 202100030425
(43) Date of publication of application: 09.10.2024
(73) Proprietor: Axial Fans Int S.r.l., 21010 Besnate (VA) (IT); Di Massimo, Andrea, 64046 Montorio al Vomano (TE) (IT)
(72) Inventor: MOSIEWICZ, Roberto Eduardo, 21010 Besnate (VA) (IT); DI MASSIMO, Andrea, 64046 MONTORIO AL VOMANO (TE) (IT)
(74) Representative: Riccardi, Sergio
(86) International application number: PCT/IT2022/050307
(87) International publication number: WO 2023/100206

(56) References cited:
- AU-B2- 483 629
- FR-A1- 2 782 941
- US-A- 2 350 996
- US-A- 5 350 475

## Description

### FIELD OF THE INVENTION

The present invention relates to an apparatus for forming a panel of the kind recited in the preamble of the first claim. More particularly, the present invention relates to an apparatus for forming a panel capable of being so combined with other dispersant panels as to form a dispersant pack to be used in a common cooling installation of an evaporation cooling tower.

### DESCRIPTION OF PRIOR ART

It is well known that a cooling or evaporation tower substantially is a big gas-liquid heat exchanger, generally having the form of a cylinder or cone-frustum parallelepiped, wherein the liquid phase yields energy to the gaseous phase so as to reduce its temperature.

Moreover, the gaseous phase generally consists of air or steam, while the liquid phase consists of several kinds of water. The heat exchange may be done by contact between the phases, and in this case the tower is defined simply as an evaporation cooling tower. Otherwise the exchange may be carried out on a surface in a heat exchanger with pipes, plates or other means, and in this case the tower is defined as cooling bank. The most common types generally comprise the forced-circulation tower and the natural induced flow tower.

The forced-circulation tower, which is the most popular for cooling water, substantially consists of a case structure made of cement, metal or various plastics, provided at its base with openings for the circulation of air supplied by a fan; a system of water distribution, consisting of distribution nozzles and a generally plastic container; and a collection tank for the cooled water.

Sometimes the tower is provided with a tank for hot water returning from the process; in this case the hot water tank is provided with pumps returning water to the principal cooling tower.

On the contrary, the induced flow cooling towers make use of the water evaporation and the difference of density of the air - steam mixture. Thus, they may avoid use of a circulation fan, that clearly impacts the global cost of the system and the energy consumption.

These towers without fan are known as induced flow, natural circulation or natural draught towers, and have a characterizing shape with a vertical section consisting of a single pitch hyperboloid having a stack.

The natural induced flow towers are preferred for nuclear and geothermal power plants, where the high costs are justified, in view of the high air flow rates. In any case, the operative principle of the cooling towers is as follows.

Water dispersed in the tower upper part, thus falling downwards, is contacted by air induced to go up by the fan or by the difference od density. The contact is as closer as wider is the surface of water droplets contacted with air, that is the surface of exchange of matter. Therefore, there is a transfer of matter from the water droplets, constituting the dispersed phase, to air constituting the continuous phase, due to the humidification of said air, which is not steam saturated (this last condition being necessary for the tower operation). Through the transfer of matter, which is of the evaporative kind, water give energy to air in a substantially isothermal way for air, but with heat transfer and consequent water cooling. Therefore, water comes out from this exchange with a temperature lower than the inlet one. The above described thermal exchange is generally carried out with packs of thermal exchange or structured fillings, substantially consisting of a plurality of undulated and overlapped panels, configured to allow drainage of water droplets and their thermal exchange with air passing between the panels.

These panels substantially are thermoformed sheets made of polymeric materials, generally PVC, characterized by reduced thickness and weight. The manufacture of these sheets or panels is generally carried out by means of conventional thermoforming and preferably vacuum plants.

Process and machines to form said panels are described in patent documents: US 2 350 996 A, AU 483 629 B2, US 5 350 475 A and FR 2 782 941 A1.

Vacuum thermoforming substantially provides for a first clamping step, in which a polymeric sheet of predetermined dimensions is substantially constrained to a dimensionally suitable frame; a second step of heating the sheet for its preparation to a subsequent plastic deformation; and a low pressure suction step of the sheet against a mould defining the form of the shaping intended for said sheet.

Frequently, these shaped sheets are also subjected to a further cutting step, wherein the edges are substantially trimmed to obtain the finished piece, namely the actual panel to be combined with other panels to obtain the completed pack.

The above described prior art has some important drawbacks. More particularly, the finished panels made in this way, in view of the cut edges, have microfractures, that during the normal operation of the plant cause panel disaggregation in the form of microparticles or microplastics. These microplastics, as is well known, are small plastic particles, generally having a diameter between 330 microns and 5 mm, destined to be discharged from the plant, thus polluting seas and oceans. Their dangerousness for health of mankind and environment is proven by several scientific reports and the most serious damages are found more particularly in the aquatic and marine habitats. This happens especially in view of the fact that plastics need several years to be fully dissolved, and until they can be found in water, may be swallowed and accumulated in the body and tissues of many organisms.

Moreover, from a technical point of view, the known thermoforming plants allow to treat panels within dimensional limits defined by the constrained frame. Therefore, it is not possible to make panels of big dimensions and the realization times strongly depend from the number of employed machines and the rapidity of the thermoforming process.

Therefore, the thermal exchange packs produced with the known technologies are not made quickly, with a consequent increase of total times and costs, in view of substantially low efficiency of the above described manufacturing procedures.

### SUMMARY OF THE INVENTION

In this situation, the technical object on which the present invention is based, is to devise an apparatus for forming a panel capable of substantially getting round at least a part of the mentioned drawbacks.

In the frame of said technical object, an important target of the invention is to obtain an apparatus for forming a panel allowing to handle panels continuously, or in absence of pauses for loading or unloading the panel to be worked.

Another important object of the invention is to make an apparatus for forming a panel that can be manufactures through quick processes, without particular dimensional limitations.

Therefore, a further object of the invention is to make an apparatus for forming a panel that can be manufactured in an economically advantageous way.

The technical object and the mentioned targets are attained by an apparatus for forming a panel as recited in the annexed claim 1.

Preferred technical solutions are pointed out in the dependant claims.

### BRIEF DESCRIPTION OF THE DRAWINGS

The characteristics and the advantages of the invention are hereinafter explained by the detailed description of preferred embodiments of the invention, with reference to the accompanying drawings, in which:
Fig. 1 is a perspective view of a dispersant panel for cooling tower according to the invention;
Fig. 2 is a simplified diagram of the structure of a dispersant panel for cooling tower of the invention;
Fig. 3 is a perspective view of a panel forming device according to the invention;
Fig. 4 is a perspective view of the device of Fig. 3, wherein the side plates were removed at a side of the die and counterdie;
Fig. 5 is a front view of the device of Fig. 4;
Fig. 6 shows a diagrammatic front view of Figures 3 - 5;
Fig. 7a is a diagrammatic view of part of a device forming the panel, during the forming operation of a panel when forming a strip of corrugated sheet, where the bending station is also shown;

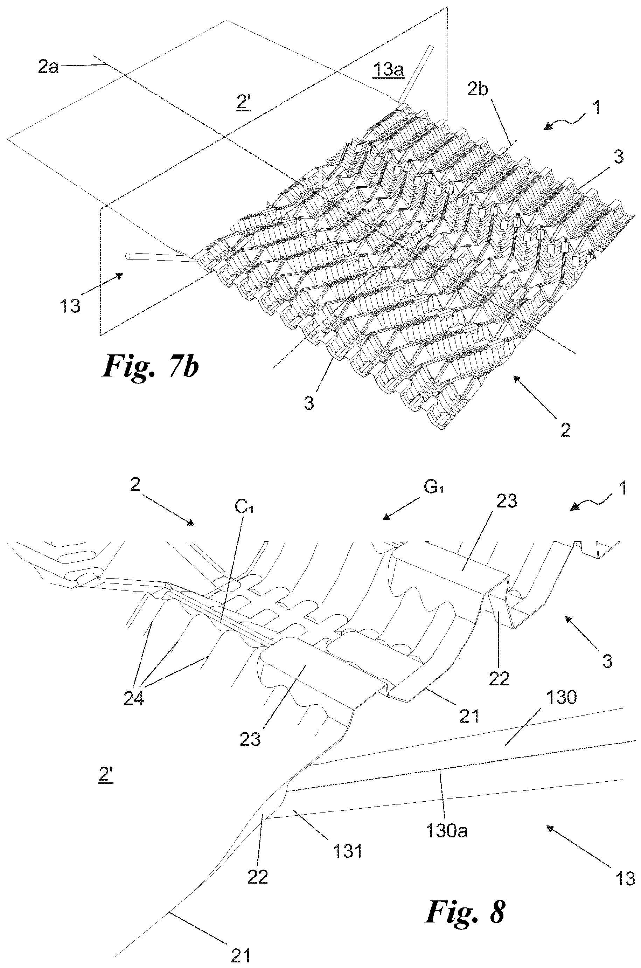

Fig. 7b is a diagrammatic view of a strip of corrugated sheet, for making a dispersant panel for cooling tower of the invention, where the bending station is also shown;
Fig. 8 shows a detail of the bending phase of a strip formed as a corrugated sheet, where it is clearly shown that the strip portion forms the edge, once pressed on the sheet during the forming operation;

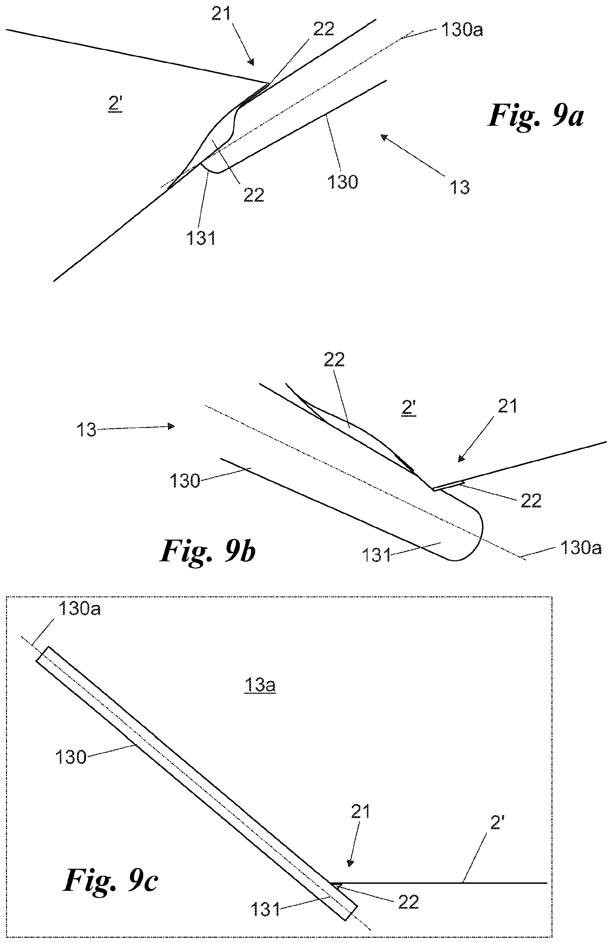

Fig. 9a is a detailed rear view of the bending phase of a strip;
Fig. 9b is a detailed front view of the bending phase of the strip of Fig. 9a;
Fig. 9c is a detailed lateral view of the bending phase of the strip of Figs. 9a -9b;
Fig. 10a shows a perspective view of a track defining part of the printing surface of a panel forming device according to the invention;
Fig. 10b shows a front view of the track of Fig. 10a; and
Fig. 11 is a functional diagram of a system for producing draining panels, comprising a panel thermoforming installation according to the invention.

### DESCRIPTION OF THE PREFERRED EMBODIMENTS

In this document, measures, values, forms and geometrical references (such as verticalness and parallelism), when associated with such terms as "about" or other similar terms like "almost" or "substantially", should be understood except for measurement errors or inaccuracies due to production and/or manufacture, and above all for a slight deviation of the value, measure, form or geometrical reference associates therewith. For instance, these terms, when associated with a value, preferably mean a deviation not greater than 10% of the value.

Moreover, when used, terms such as "first", "second", "higher", "lower", "main" and "secondary" do not necessarily identify an order, a priority of relation or corresponding position, but may be merely used to distinguish different components more clearly from each other.

Unless where specified otherwise, as it will be apparent hereinafter, terms such as "treatment", "informatics", "determination", "calculation" and the like, refer to the action and/or process of a computer or similar device of electronic calculation manipulating and/or transforming data represented as physical ones, such as electronic magnitudes of an informatic system and/or memory, into other data likewise represented as physical quantities inside informatic systems, registers or other devices of storage, transmission or display of data.

The measurements and data reported in the present disclosure are to be considered, unless where otherwise stated, as carried out under the ICAO International Standard Atmosphere (ISO 2533:1975).

With reference to the figures of the drawings, the dispersant panel for cooling tower of the invention is overall indicated with reference number 1.

The panel 1 substantially is a geometric tridimensional element. Wherein two dimensions are predominant in respect of the third one. More particularly, preferably the panel 1 is defined by a lower thickness when compared with length and width considered on a plane.

Generally, panel 1 is substantially the product of forming or thermoforming a band 2'. Band 2' is a flat element of low thickness, preferably extending along a longitudinal direction 2a.

The longitudinal direction 2a substantially is the direction along which band 2' is extended and may be rolled up. Band 2' preferably defines also a transversal direction 2b which is perpendicular to the longitudinal direction 2a. Therefore, the transversal direction 2b substantially is the direction defining the width of band 2', while the longitudinal direction 2a is the direction defining the length of band 2'.

Moreover, band 2' defines two ends 21. The ends 21 preferably are the opposite ends of the longitudinal direction 2a and are also opposite along the transversal direction 2b and are defined by the lateral borders of band 2'.

As already stated, panel 1 is the product of the deformation of band 2'. This deformation may be done with any known technology, for instance by forming or thermoforming by means of a preformed press defining a die and counterdie configured with the for the form intended to be given to the band 2' to make the panel 1. However, other specific technologies may be used, as it will be better explained hereinafter.

In the preferred embodiment of the invention, band 2' is being deformed so as to obtain a corrugated sheet. Therefore, panel 1 in its preferred embodiment preferably comprises the corrugated sheet 2.

Sheet 2 preferably extends between a first plane 1a and a second plane 1b. Planes 1a and 1b are mutually parallel and moreover they substantially define virtual planes licked by sheet 2 and substantially including the maximum and minimum zones of sheet 2. Indeed, it is well known that an undulated geometrical element extends along a predetermined direction, at the same time crossing in turn maximum and minimum points.

The first plane 1a and the second plane 1b are also preferably parallel to the longitudinal direction 2a. Clearly, as sheet 2 is the result of the deformation of band 2', it extends too along the longitudinal direction 2a, waving on it. Moreover, also sheet 2 comprises or defines two ends 21 along the transversal direction 2b in respect of the longitudinal direction 2a. With further detail, sheet 2 defines wave forms 20.

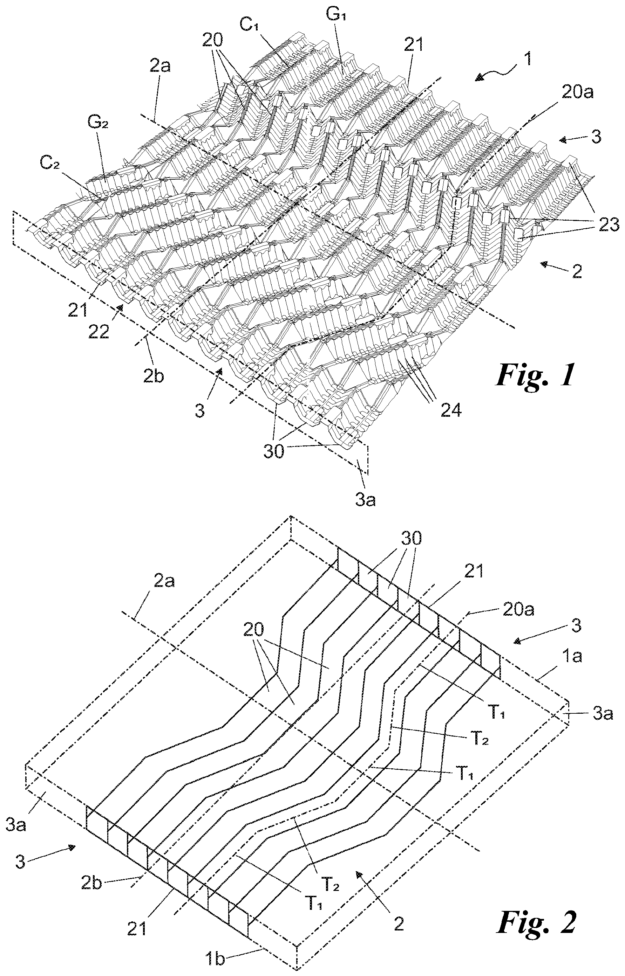

Wave forms or borders 20 are the forms for the extension of the undulation in the direction of extension of panel 1. Therefore, the wave forms 20 are recurring along the longitudinal direction 2a. Moreover, the wave forms may extend along a wave path 20a. The wave path 20a is substantially transverse to the longitudinal direction 2a. In view of this, the wave path 20a may be rectilinear or preferably not rectilinear, as clearly shown in Figures 1-2.

In the preferred embodiment, wave forms 20 extend all along wave paths 20a transverse to the longitudinal direction 2a. Moreover, these wave paths 20a are preferably not rectilinear.

For example, wave path 20a may comprise in succession at least a first length T₁ and a second length T₂.

The first length T₁ is preferably rectilinear and parallel to the transversal direction 2b or perpendicular to the longitudinal direction 2a, whereas the second length T₂ is substantially rectilinear and transversal to both the transversal direction 2b and the longitudinal direction 2a. In other words, length T₂ is a skew piece.

With a further detail, in the preferred embodiment, shown by way of example in Figure 1 and diagrammatically in Figure 2, the wave path 20a comprises, successively between the ends 21, a first length T₁, a second length T₂, a first length T₁, a second length T₂ and a further first length T₁.

Preferably, the first lengths T₁ adjacent to the ends 21 are mutually aligned. Consequently, this means that the wave path 20a extends along the longitudinal direction 2a in the central part i.e. between the ends 21 of sheet 2, and returns to its transversal direction at the ends 21 of sheet 2.

Of course, the first lengths T₁ adjacent to ends 21 might also not be aligned, and the wave path 20a may be extended sidelong the longitudinal direction 2a.

Considering the extension transversal to planes 1a, 1b, the wave paths 20a may define some particular characteristics. Preferably, each wave path 20 comprises a first bulge G₁ and a second bulge G₂. More particularly, the first bulge G₁ extends along each first length T₁ and the second bulge G₂ extends along each second length T₂. These bulges G₁, G₂ are merely zones defining concavities. Preferably the bulges G₁, G₂ define mutually opposite concavities. This means that if the concavity of the first bulge G₁ is turned to the second plane 1b, then the concavity of the second bulge G₂ is turned to first plane 1a or vice versa.

In addition to the above description, preferably the first bulge G₁ defines a first top C₁. The first top C₁ extends either on the first plane 1a or on the second plane 1b. Moreover, the first top C₁ extends parallel to the first length T₁, while the second bulge G₂ defines a second top C₂. The second top C₂ extends either on the first plane 1a or on the second plane 1b.

Preferably, the second top C₂ extends on the first plane 1a if the first top C₁ extends on the second plane 1b, or the second top C₂ extends on the second plane 1b if the first top C₁ extends on the first plane 1a. Preferably, the second top C₂ extends parallel to the second length T₂. Therefore, the tops C₁, C₂ are the maximum or minimum zones, respectively, of the bulges G₁, G₂ of each wave path 20.

The first top C₁ and/or the second top C₂ may additionally comprise an interface surface 23. If present, the interface surface 23 is a plain, preferably smooth zone, defining a greater extension along the longitudinal direction 2a than the tops C₁, C₂. Thus, the interface surface 23 is suitable to be put in contact with the interface surface 23 of another panel 1.

In this way, it is possible to match efficiently a plurality of panels 1 to obtain a drainage pack comprising a plurality of panels 1, particularly efficient according to the preferred embodiment.

In order to improve the panel and pack efficiency, allowing during drainage the thermal exchange and cooling of the liquid, as it happens typically in the cooling towers, the panel may comprise further moves.

More particularly, each bulge G₁, G₂ may comprise a plurality of ribs 24. When present, the ribs 24 extend transversally to the first length T₁ and the second length T₂, respectively. Therefore, these ribs 24 are convex or concave portions of sheet 2, allowing to increase the surface of thermal exchange of the corrugated sheet and consequently of the global panel 1 or a drainage pack comprising a plurality of panels.

Clearly, when the panels 1 are coupled to make a pack, they are superimposed successively, for instance by causing a first plane 1a of a panel 1 to coincide with the second plane 1b of an adjacent panel 1 and vice versa. Moreover, the junction zones may be made artificially, or it is possible to utilize the interface surfaces 23, when present, for instance by mutually gluing the interface surfaces 23 of some panels 1.

In any case, panel 1 is provided with edges 3. Edges 3 preferably extend parallel to the longitudinal direction 2a at the ends 21. Obviously, in view of the undulatory geometry of sheet 2, the edges 3 are not rectilinear, but they too move along non-rectilinear paths. Indeed, each edge 3 defines at both ends 21 profiles 30. Still more in detail, profiles 30 are defined for each wave form 20. Therefore, also the profiles 30 are recurrently parallel to the longitudinal direction 2a. More particularly, profiles 30 are developed on a tangential plane 3a. The tangential plane 3a is at right angles with the transversal direction 2b, then parallel to the longitudinal direction 2a.

Moreover, advantageously, the edges 3 are made by a rim 22 of sheet 2, thus also of band 2', folded on said sheet 2 or band 2', at the end 21. Rim 22, which is a part of band 2' before the forming phase, and the part of the sheet 2 after the forming phase giving the undulatory shape to band 2' to sheet 2, may be a strip of band 2' or sheet 2 at each end, defining a reduced thickness, for instance between 1 mm and 1 cm.

Each rim 22 forming the edges 3 is then advantageously folded on sheet 2 or band 2' without gaps. Thus, there are no points of singularity or irregularity on the edge 3 that may lead to subsequent fractures.

As already stated, panel 1 may be made with any forming device or installation, or the panel 1 may be made by a specific forming device or thermoforming installation.

With reference to the figures of the drawings, the thermoforming installation for the panel according to the invention is globally indicated with the reference numeral 10.

Therefore, the thermoforming installation 10 is preferably suitable to allow production of panel 1 of the invention in its preferred embodiment. However, the installation 10 might also be suitable to make panels of different kind, that is different from panel 1.

Briefly, the thermoforming installation 10 comprises at least conveyance means, a heating station 11 and a forming apparatus. The conveyance means are configured to convey band 2' in the longitudinal direction 2a. Therefore, the conveyance means are substantially configured to define a conveyance path along which the band 2' is extended and moved for its production. For example, the conveyance means may comprise a reel 14. The reel 14 may comprise the band 2' rolled up. Moreover, reel 14 when provided, is preferably arranged upstream the heating station 11.

The conveyance means may comprise also one or more transmission means 15. The transmission means 15 preferably are intermediate elements arranged at least between reel 14 and the forming apparatus. Clearly, transmission means 15 may comprise simple rollers on which, the band 2' is running, defining a path in the longitudinal direction 2a. However, the transmission means 15 may also comprise tensioning devices, configured for tensioning locally band 2' to keep it spread and avoid laps at least when the band 2' reaches the forming apparatus.

The heating station 11 is configured to heat band 2'. More particularly, the heating station 11 is configured to heat the band 2' with a quantity of heat sufficient to make it deformable. Obviously, such a quantity of heat is different according to the kind of material. Preferably, the band 2' consists of polymeric material, for instance PVC, so that the heating station 11 is capable of developing sufficient heat to make machinable the material, even when compared with the total thickness of band 2'.

Obviously, the parameters to be defined for the heating station 11 are known per se by a skilled technician, who can surely discern the required amount of heat according to the kind of material and its thickness.

The heating station 11 moreover is a kind of oven defining a charging door and an outlet, arranged along the longitudinal direction 2a, so that the band 2' can enter through the charging door and go out through the outlet, after passing by heat exchangers, such as incandescent resistors, hot air jets or other. Also the typical structure of the heating stations is known per se to a man skilled in this art.

The forming apparatus is arranged downstream the heating station 11. The forming apparatus is generally fitted to receive the band 2' along the longitudinal direction 2a. Moreover, the forming apparatus is configured to form the band 2' pressing it between die and counterdie so as to produce a panel like panel 1.

Therefore, the forming apparatus comprises at least a counterdie. The forming apparatus may comprise a vacuum chamber including the counterdie and may be configured to receive the band 2' along the longitudinal direction 2a and press the band 2' on the counterdie 6.

In turn, the forming apparatus may also comprise a die and be configured to form the band 2' and make a panel, by pressing mechanically the band 2' between die and counterdie. Of course, also in this case a man skilled in this art knows the great number of technologies that can be adopted to heat form a band 2' or a plate or slab.

Therefore, the forming apparatus may include at least a counterdie, possibly even a die countershaped to the counterdie, configured to allow the production of a panel of any form or a panel 1 of the invention.

As above mentioned, the forming apparatus might be a conventional apparatus, for instance as hereinbefore described, or a specific forming apparatus.

With reference to the figures of the drawings, the panel forming apparatus of the invention is globally depicted with reference numeral 4.

The apparatus 4 may be equally used in the thermoforming installation 10, or in any other thermoforming installation, namely having different features, for instance different conveyor means, different heating station 11 or others.

The forming apparatus 4, like the thermoforming installation 10, is preferably adapted to allow production of the panel according to the invention, more particularly in the preferred embodiment; however, the forming apparatus 4 might also be adapted to make panels of different form, i.e. different from panel 1.

Apparatus 4 is fitted to receive the band 2' along the predetermined direction 2a. Moreover, apparatus 4 preferably comprises in few words a die 5 and a counterdie 6. Advantageously, die 5 and counterdie 6 have some important features.

The die 5 preferably comprises a plurality of first tracks 50. The first tracks are elongated elements, which when used extend parallel to the direction 2b transversal to the band 2'. Therefore, the first tracks 50 are movable along a first path 5a.

The first path 5a substantially is the path along which the first tracks 50 are moved in respect of a fixed reference system, for instance the soil or another component of a forming or thermoforming installation, or even of the same apparatus 4, like for instance a structural frame on which die 5 and counterdie 6 are fixed.

The first path 5a may be open, for instance even rectilinear. Otherwise, the first path 5a may be closed. Preferably, the first path 5a is closed, so that the first tracks 50 may cyclically return to the same positions. Moreover, the first path 5a may have a particular form, depending from the structure of the motion mechanism of the first tracks 50.

Preferably, the first path 5a has an almost elliptical form, for instance comprising two semi-circular portions jointed by rectilinear sections. Therefore, the first tracks 50 are arranged in succession so as to make a first forming surface 51. The first forming surface 51 is substantially a surface configured to give the intended shape to band 2' obtaining the deformed sheet of a panel, for instance like the undulated sheet 2 of panel 1.

Preferably, the first forming surface 51 is defined as corresponding at least to a first segment s' of the first path 5a. The first segment s' is preferably a rectilinear portion of the first path 5a. Therefore at least in the first segment s', the first tracks 50 are mutually aligned in contact, thus adjacent so as to form as a whole the first forming surface 51. Therefore, the first forming surface 51 consists of the whole of the forming surfaces of the side by side individual first tracks 50.

When the first path 5a is elliptical, the first segment s' may for instance correspond with a rectilinear portion connecting the semi-circular portions. The first segment s' is also preferably parallel to the longitudinal direction 2a. Therefore, the first printing surface 51 is distributed along the longitudinal direction so that, when the die 5 presses the band 2' transversally to the longitudinal direction 2a, the shape of the first forming surface 51 is transmitted to the band 2'.

Preferably, the die 5 is operative as opposed to counterdie 6. Therefore, also the latter has features which are similar or even identical to die 5. Indeed counterdie 6 preferably comprises a plurality of second tracks 60. The second tracks 60 are elongated elements, when used extending parallel to the transversal direction 2b in respect of band 2'. Therefore, the second tracks 60 define special forms to be locally given to band 2'.

Therefore, the second tracks 60 are movable along a second path 6a. The second path 6a substantially is the path on which the second tracks 6o are moved in respect of a fixed reference system, for instance the ground or another component of a forming or thermoforming installation, or even the same apparatus 4 like for example a structural frame on which die 5 and counterdie 6 are bound.

The second path 6a may be open, for instance even rectilinear. Otherwise, the second path 6a may be closed. Preferably, the second path 6a is closed, so that the second tracks 60 may cyclically return to the same positions. Moreover, the second path 6a may take a particular shape, depending from the structure of the movement mechanism of the second tracks 60.

Preferably, the second path 6a defines an almost elliptical shape, for example comprising two semi-circular portions connected by rectilinear parts. The second tracks 60 are then arranged in succession so as to form at least a second forming surface 61. The second forming surface 61, like the first forming surface 51. Is substantially a surface configured to give a desired shape to band 2' to obtain a formed sheet of a panel, for instance like the corrugated sheet 2 of panel 1.

Preferably the second forming surface 61 is defined with at least a second segment s" of the second path 6a. The second segment s" preferably is a rectilinear portion of the second path 6a. Therefore, at least for the second segment s", the second tracks 60 are mutually aligned, in contact and then adjacent, so as to form altogether the second forming surface 61. Therefore, the second forming surface 61 consists of the whole of the forming surfaces of the side by side second tracks 60.

If the second path 6a is elliptical, the second segment s" may for instance correspond with a rectilinear part of connection between semi-circular portions. The second segments s" is also preferably parallel to the longitudinal direction 2a. Therefore, the second forming surface 61 is arranged along the longitudinal direction so that, when the counterdie 6 is pressing the band 2' transversally to the longitudinal direction 2a, the shape of the second forming surface 61 is transmitted to the band 2'.

Therefore, the second forming surface 61 has preferably a shape reverse to the first forming surface so that the forming surfaces 51, 61 jointly define a particular shape to be given to the band 2' to make a panel, for example like panel 1, when band 2' is formed like sheet 2. In other words, the second forming surface 61 is the negative of the first forming surface 51 or vice versa.

Therefore, die 5 and counterdie 6 may be substantially two elements which are substantially similar or identical and mirror images for band 2' or longitudinal direction 2a, excepting only the forming surfaces 51, 61 which are mutually complementary or countershaped.

As already noted, the tracks 50, 60 are movable. Preferably, apparatus 4 comprises first movement means 7 and second movement means 8. In substance, the first movement means 7 are configured to move the first tracks 50 along the first path 5a. The second movement means 8 are configured to move the second tracks 60 along the second path 6a.

Advantageously, the movement means 7, 8 are further configured to move the tracks 50, 60 at the same time in a coordinated way in the same direction at least for the segments s', s".

In other words, the tracks 50, 60 are moved, in view of the configuration of the movement means 7,8 preferably together, at the same speed, in the same direction, namely jointly for the segments s', s".

Advantageously, the segments s', s" are mutually facing so that the forming surfaces 51, 61 always interpenetrate pressing the band 2' inserted between die 5 and counterdie 6. At the same time, band 2' is moved along the longitudinal direction 2a through the forming surfaces 51, 61. Indeed the tracks 50, 60 are moved along the paths 5a, 6a pushing and at the same time compressing the band 2' in the longitudinal direction 2a. In this way, a panel, for instance panel 1, is being produced.

Moreover, if the paths 5a, 5b are closed, apparatus 4 defines an entry zone, wherein the tracks 50, 60 mutually converge advancing along the relevant paths 5a, 6a, and an exit zone, wherein the tracks 50, 60 mutually diverge, advancing along the relevant paths 5a, 6a. Between the entry zone and the exit zone, the tracks 50, 60 are advancing along the paths 5a, 6a, defining altogether interpenetrating forming surfaces 51, 61. Therefore, band 2' is substantially inserted in the entry zone , wherein the tracks 50,60 near the band 2' until they touch and then press it, when the tracks 50, 60 are side by side aligned defining the forming surfaces 51, 61. Then in the exit zone the tracks 50, 60 move away from sheet, for example sheet 2 obtained by deformation of band 2', allowing said sheet and then panel to move forward autonomously.

The movement means 7, 8 too may be mirror arranged in the longitudinal direction 2a. Moreover, they may comprise some particular components. For instance, the first movement means 7 may comprise a first transport mechanism 70.

The first transport mechanism 70 substantially defines the first path 5a. In the preferred but not exclusive embodiment of apparatus 4, in which the first path 5a is closed, the first transport mechanism 70 comprises two first gear wheels 70a and a first belt 70b. The first gear wheels 70a are preferably rotating and mutually spaced. The first belt 70b is moved by the first gear wheels 70a, more particularly around said gear wheels 70a, thus defining the first path 5a. The first belt 70b may be a single continuous e.g. monolithic piece or may include a discontinuous element, for instance a chain comprising a plurality of sequentially connected links. Preferably, the first belt 70b consists of a chain defining well known pins and links.

In the same way, the second movement means 8 may comprise a second transport mechanism 80. The second transport mechanism 80 substantially defines the second path 6a. In the preferred but not exclusive embodiment of apparatus 4, in which the second path 6a is closed, the second transport mechanism 80 comprises two second gear wheels 80a and a second belt 80b. The second gear wheels 80a are preferably rotating and mutually spaced. The second belt 80b is moved by the second gear wheels 80a, more particularly around said gear wheels 80a, thus defining the second path 6a. Even the second belt 80b may be a single continuous e.g. monolithic piece or may include a discontinuous element, for instance a chain comprising a plurality of sequentially connected links. Preferably, the second belt 80a consists of a chain defining well known pins and links.

The tracks 50, 60 then are preferably operatively connected with the first transport mechanism 70 and the second transport mechanism 80. In detail, preferably the gear wheels 70a, 80a are rotating in the same direction at the same speed.

The first tracks 50 may be directly connected with the first transport mechanism 70, for instance with the first belt 70b. Otherwise, the first movement means 7 may comprise a plurality of first driving elements 71. The first driving elements 71 are operatively connected with the first transport mechanism 70 in connection with the first path 5a. Moreover, each first driving elements 71 is preferably labile constrained with a corresponding first track 50. Likewise, the second tracks 60 may be directly connected with the second transport mechanism 80, for instance with the second belt 80b. Otherwise, the second movement means 8 may comprise a plurality of second driving elements 81. The second driving elements 81 are operatively connected with the second transport mechanism 80 corresponding to the second path 6a. Moreover, each second driving element 81 is preferably labile constrained with a corresponding second track 60.

If the belts 70b, 80b consist of chains, each first driving element 71 is labile constrained with a corresponding pin of the first belt 70b. Preferably this constraint is obtained by a hinge. Moreover, each second driving element 81 is labile constrained with a corresponding pin of the second belt 80b. Even in this case, the constraint is preferably obtained by a hinge.

The apparatus 4 may comprise some additional important features, which are not essential but useful to increase the efficiency of apparatus 4.

Advantageously, die 5 may comprise a first internal guide 52. The first internal guide 52 extends almost parallel to the first path 5a. If the first path 5a is closed, preferably the first internal guide 52 is arranged inside the first path 5a.

Then, each first driving element 71 may comprise a first internal slider 71a. The first internal slider 71a is preferably labile constrained with the first internal guide 52 and it is mobile along said first internal guide 52. Likewise, counterdie 6 may comprise a second internal guide 62. The second internal guide 62 may be extended substantially parallel to the second path 6a. If the second path 6a is closed, preferably the second internal guide 62 is arranged inside the second path 6a.

Then, each second driving element 81 may comprise a second internal slider 81a. The second internal slider 81a is preferably labile constrained with the second internal guide 62 and is also mobile along the second internal guide 62.

The internal guides 52, 62 may be simple trackings or lines, on which the internal sliders 71a, 81a may be moved. For instance, the internal guides 52, 62 may be defined on lateral plates arranged beside the tracks 50, 60 and integral with the structural frame of apparatus 4.

The internal sliders 71a, 81a may be pins or cylinders to be inserted into the internal guides 52, 62 so as to move along predetermined trajectories.

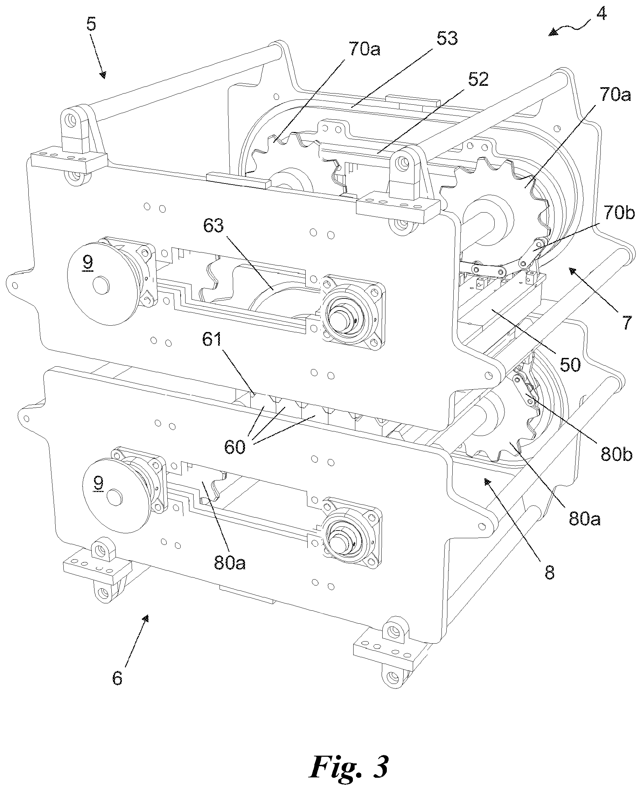

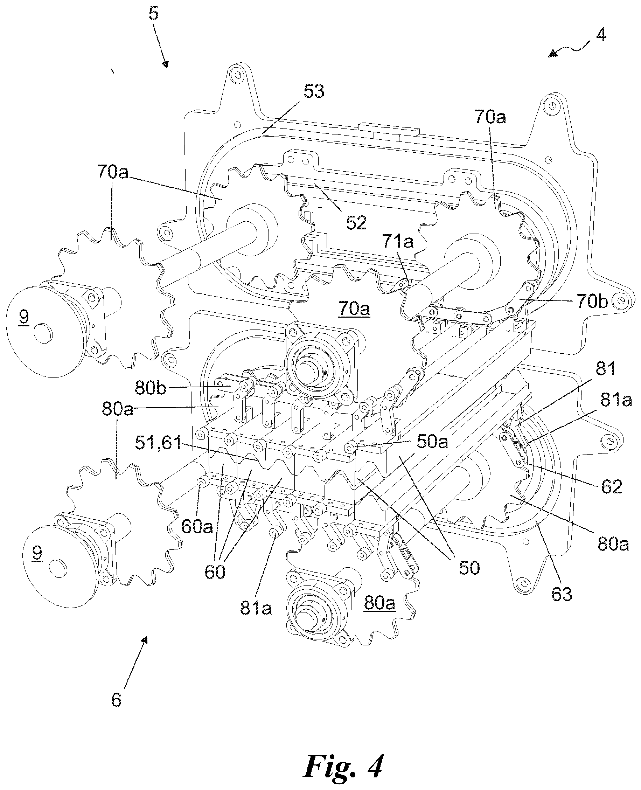

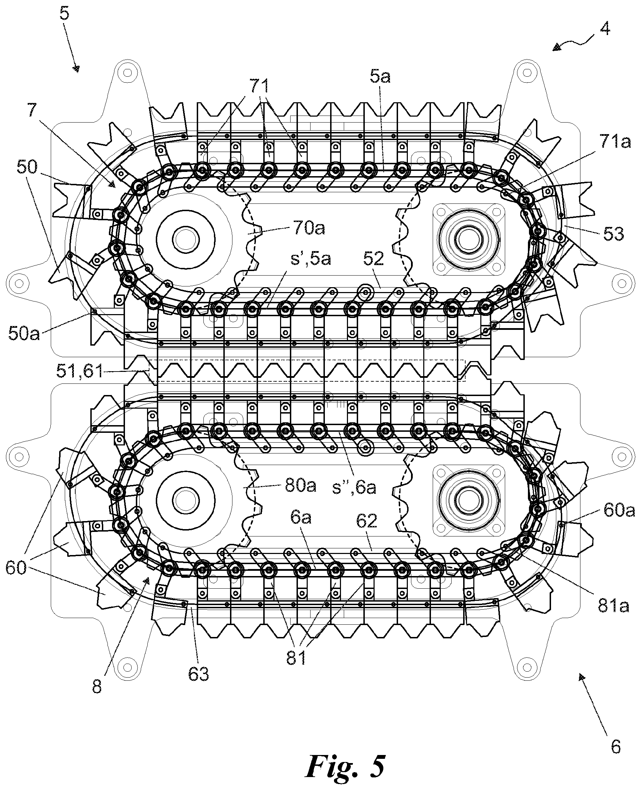

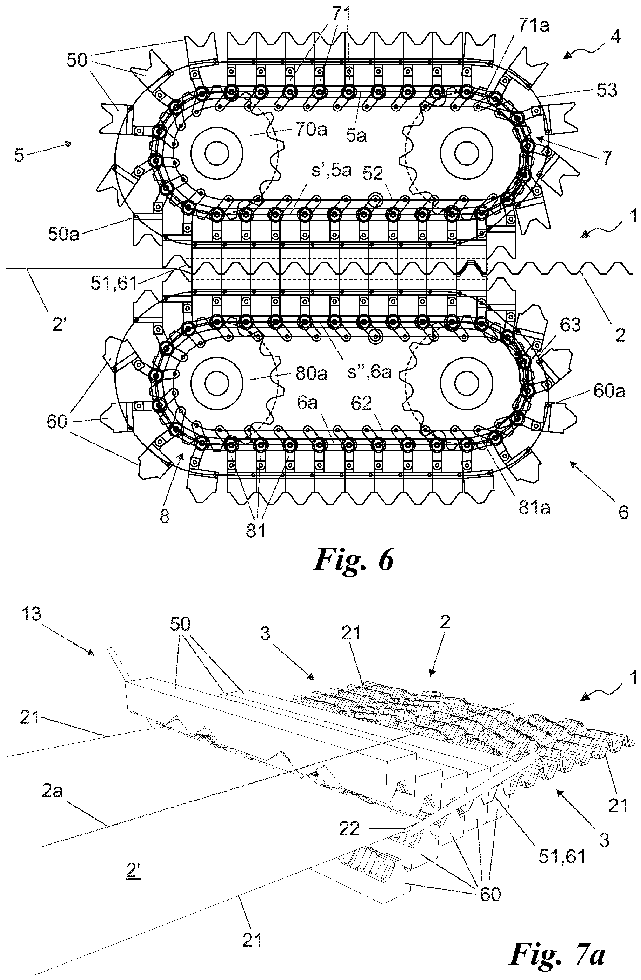

It is also important to note that the internal guides 52, 62 are parallel to paths 5a, 6a and may define identical or slightly different trajectories. For instance, the internal guides 52, 62 may define trajectories closer to the paths 5a, 6a near the release zone of apparatus 4, and more away from said paths 5a, 6a near the entry zone of apparatus 4, as clearly shown in Figures 3-6.

The first driving element 71 may also have the form of a boomerang. Therefore, the first internal slider 71a may be arranged at a free end of the boomerang, and the first driving element 71 may be labile constrained to a corresponding first track 50 at the other boomerang free end. Even in this case, the constraint may be obtained through a hinge.

Moreover, advantageously, the first driving element 71 may also be labile constrained with the first belt 70b at the boomerang intermediate edge. Therefore, the first driving element 71 may be dragged by the first belt 70b along the first path 5a, but it may be rotated on the first belt 70b around an axis aligned for instance with a pin of the chain defining the first belt 70b.

Moreover, the second driving element 81 may also define a boomerang shape. Therefore, the second inner slider 81a may be arranged at a boomerang free end, and the second driving element 81 may be labile constrained to a corresponding second track 60 at the other boomerang free end. Also in this case, the constraint may be done through a hinge.

Advantageously, the second driving element 81 moreover may be also labile constrained with the second belt 80b at the boomerang intermediate edge. Therefore, the second driving element 81 may be dragged by the second belt 80b along the second path 6a, but it may be rotated on the second belt 80b around an axis aligned for instance with a pin of the chain defining the second belt 80b.

In addition to the foregoing description, apparatus 4 may include further features.

For instance, the die 5 may comprise a first external guide 53. When present, the first external guide 53 extends parallel to the first path 5a outside this path 5a. Therefore, each first track 50 may include a first outer slider 50a. When present, the first outer slider 50a is labile constrained to the first external guide 53. Moreover, it may be moved along the first external guide 53.

In the same way, the counterdie 6 may comprise a second external guide 63. When present, the second external guide 63 extends parallel to the second path 6a but outside it. Therefore, each second track 60 may comprise a second external slider 60a. If present, the second external slider 60a is labile constrained to the second external guide 63. Like for the internal guides 52, 62, the external guides 53, 63 may be simple trackings or lines where the external sliders 50a, 60a may be moved.

For instance, the external guides 53, 63 may be defined on lateral plates arranged sideways of the tracks 50, 60 and integral with the structural support frame of apparatus 4. These plates may be the same plates including the internal guides 52, 62, so that the lateral plates may include all the guides 52, 53, 62, 63.

The external sliders 50a, 60a may be pins or cylinders which may be inserted in the external guides 53, 63 so as to move along predetermined trajectories. It is also important to note that the external 53, 63 are parallel to paths 5a, 6a and may define identical or slightly different trajectories. For example, even the external guides 53, 63 may define trajectories closer to paths 5a, 6a near to the release zone of apparatus 4, and trajectories more off from paths 5a, 6a close to the entry zone of apparatus 4, as clearly shown in Figs. 3-6.

In conclusion, apparatus 4 may comprise motor means 9. The motor means 9 may include one or more electric rotary motors known per se. Moreover, the electric motors may be operatively connected to at least a first gear wheel 70a and a second gear wheel 80a.Therefore, they may be configured to rotate together or individually the first gear wheel 70a and the second gear wheel 80a. Therefore, one single motor may move at the same time both gear wheels 70a, 80a. However, each gear wheel 70a, 80a may be connected with a corresponding motor and moved individually.

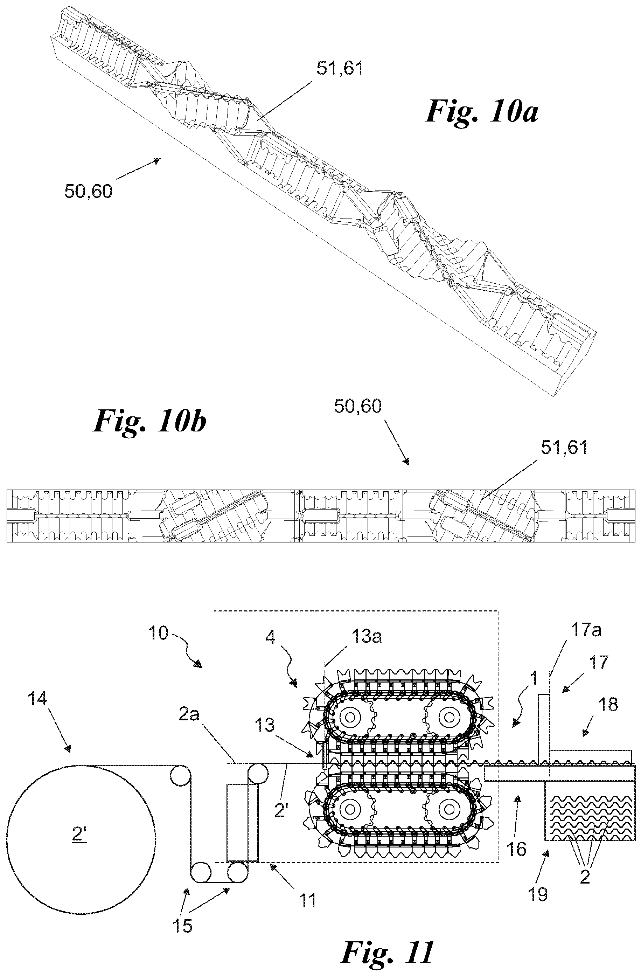

In conclusion, if the tracks 50, 60 are configured to form the band 2' as a sheet 2 to obtain panel 1, it is preferable that the tracks 50, 60 define part of the forming surfaces 51, 61 as shown in Figures 10a-10b.

In detail, it is preferable that on each track 50,60 there is a portion of forming surface 51,61 substantially countershaped in respect of a zone of panel 1 defined by two aligned first lengths T₁ adjacent to the ends and being part of a first wave form 20a, part of two second length T₂ each adjacent to a corresponding first length T₁ of the first wave form 20a, part of two second lengths T₂ of a second wave form 20a alongside the second lengths T₂ of the first wave form and connected by a first length T₁ of the second length 20a. In other words, on the portion of forming surface 51, 61 of a single track 50, 60, it is preferable that there are the shapes of the central part of a wave form 20a and of the lateral part, that is the ends 21 of another wave form 20 adjacent to the preceding one.

Therefore, the thermoforming installation 10 may comprise the particular apparatus 4, as above described in detail, or any other forming apparatus allowing to form the band 2' to obtain a deformed sheet defining a panel.

In any case, preferably the thermoforming installation 10 is particularly suitable to make the above described edges 3. Indeed, the thermoforming installation 10 comprises at least a bending apparatus 13. The bending apparatus 13 is preferably arranged upstream the forming apparatus, like for instance the apparatus 4.

Moreover, advantageously, the bending apparatus 13 comprises at least two obstacles 130. Each obstacle 130 interferes with a corresponding end 21 of band 2' advancing along the longitudinal direction 2a. Therefore, each obstacle 130 is configured to bend a corresponding rim 22 of band 2' at the corresponding end 21. In detail, each obstacle 130 is configured to define a bend up to an acute angle, that is lower than a right angle between the rim 22 and the rest of band 2', so as to allow the forming apparatus, possibly just the apparatus 4, then to press the rim 22 on the band 2' to obtain the edge 3.

Still more in detail, each obstacle 130 is preferably an elongated body. Preferably, the elongated body is extended along a central axis 130a. The central axis 130a is also transversal to band 2'. The obstacle 130 further comprises a point 131. The point 131 substantially contacts the band 2' and is advantageously positioned close to the counterdie at the entry of the forming apparatus.

If the forming apparatus has a structure like the apparatus 4, then point 131 may be positioned close to counterdie 6, and in greater detail between die 5 and counterdie 6. The term point does not mean the end, but merely a terminal more or less wide zone, sufficient to contact the band 2' and give to rim 22 the desired bending form.

Still more conveniently, the obstacles 130 are so configured, that the central axes 130a converge in the band 2'. Therefore, the central axes 130a converge in an obstruction plane 13a. The obstruction plane 13a is preferably perpendicular to the longitudinal direction 2a.

If the installation 10 comprises the forming apparatus 4, the conveyance means preferably comprise also the apparatus 4. Indeed, in view of the tracks 50, 60 moving the band 2' whilst forming it to make the sheet and then the panel, the band 2' is substantially dragged by apparatus 4 along the longitudinal direction 2a.

In addition to the foregoing description, the installation 10 may include some other contrivances.

For instance, the installation 10 may further comprise a support 16. If present, support 16 is arranged downstream the forming apparatus, possibly the apparatus 4. Therefore, support 16 is configured to support the panel, made by forming the band', along the longitudinal direction 2a. The support 16 may comprise merely a working plane or bench, on which the panel rests when coming out from the forming apparatus.

The installation 10 may also comprise a cutting station 17. When present, the cutting station 17 is preferably arranged on the support 16. Moreover, the station is configured to cut the panel along a cutting plane 17a. The cutting plane 17a is preferably perpendicular to the longitudinal direction 2a. The cutting station 17 comprises known cutting means, for instance mechanical ones, including a blade, laser or even a fluid under high pressure.

The installation may further comprise a switching station 18. The switching station 18 is preferably arranged downstream the cutting station 17. Moreover, the switching station 18 too is preferably arranged on support 16 Therefore, the switching station 18 is configured to push the panel divided up by the cutting station 17 parallel to the transversal direction 2b. In this way, the switching station clears the support 16 from the divided panel. Substantially, the panel is pushed in the air so as to fall down by gravity from support 16. Of course, it might also be possible to allow the divided panels to continue the travel beyond support 16 along the longitudinal direction 21 and fall down.

Moreover, the installation 10 may comprise one or more collection stations 19. The collection stations 19 are preferably arranged adjacent to said support 16 at said switching station 18, and they are configured to collect the divided panels removed from said support 16.

Therefore, the collection stations 19 may be mirror arranged alongside and/or in the longitudinal direction 2a. The collection stations 19 may also consist of simple containers, or even the same panels, where they fall by gravity, once they are pushed or fall from the switching station 18.

The invention comprises a novel process of forming the panel 1. The process substantially comprises at least a folding stage. The folding stage preferably precedes the stage of forming the band 2' into a sheet 2, namely the stage of causing the sheet 2 corrugated. Moreover, in the folding stage the rim 22 of sheet 2 is folded on the same sheet 2 at the ends 21 without gaps.

The invention comprises also a novel process of thermoforming the panel. Preferably, the thermoforming process is carried out with the installation 10. Thus, the thermoforming process comprises at least the heating, conveying and pressing steps. In the heating step, the band 2' is heated with a quantity of heat sufficient to make the band 2' capable of being deformed.

Then, in the conveyance step, the band 2' is conveyed to the forming apparatus along the longitudinal direction 2a through the folding station 13. In this way, the rim 22 of band 2' is folded at the ends 21 so as to define an acute angle between rim 22 and the remainder of band 2'.

Of course, if the installation 10 comprises apparatus 4, then the conveyance step is carried out also by apparatus 4 which moves the band 2' thereto in view of the movement of tracks 50, 60. In the compression step, the rim 22 is pressed on band 2 in the forming apparatus so as to obtain the edge 3.

If the forming apparatus is the apparatus 4, the band 2' is pressed along the segments s', s" between the forming surfaces 51, 61. Moreover, if the forming apparatus is configured to make a panel 1, the band 2' is corrugated in order to define sheet 2 as previously described. If the forming apparatus is apparatus 4, in this case the tracks 50, 60 may define part of the forming surfaces 51, 61 as hereinbefore described.

In conclusion, the invention comprises a novel process of forming a panel whatsoever, possibly a panel 1. Such a process is advantageously carried out by apparatus 4. The process comprises at least an introduction stage and a movement stage.

In the introduction stage, band 2' is inserted between die 5 and counterdie 6 along the longitudinal direction 2a. In detail, the band 2' is introduced until contacting the forming surfaces 51, 61. Then, the band 2' is preferably introduced up to the limit of entry of apparatus 4. Where the tracks 50, 60 mutually converge.

In the movement stage, the first tracks 50 and the second tracks 60 are simultaneously moved in a coordinated way, so as to move in turn the band 2' along the longitudinal direction 2a. At the same time, the forming surfaces 51, 61 press the band 2' thus forming it and obtaining the panel 1. When the tracks 50, 60 are configured to make panel 1, then the band 2' is corrugated thus making the sheet 2 and consequently the panel 1, as above described.

The apparatus 4 for forming a panel according to the invention attains important advantages.

Indeed, the apparatus 4 for forming a panel allows to handle panels continuously, or in absence of pauses for loading or unloading the panel to be worked.

Then apparatus 4 allows to carry out a quick forming process, without particular dimensional limitations.

In conclusion, the apparatus 4 allows to manufacture panels in an efficient and economically advantageous way.

## Claims

1. Apparatus (4) for forming a panel (1) and designed to receive a flat strip (2') along a longitudinal direction (2a), comprising:
- a die (5) including a plurality of first tracks (50) movable along a first path (5a) and consecutively arranged so as to make at least a first forming surface (51) at least at a first segment (s') of said first path (5a) parallel to said longitudinal direction (2a);
- a counterdie (6) including a plurality of second tracks (60) movable along a second path (6a) and consecutively arranged so as to make a second forming surface (61) countershaped with said first forming surface (51) at least at a second segment (s") of said second path (6a) parallel to said longitudinal direction (2a);
- first movement means (7) configured to move said first tracks (50) along said first path (5a); and
- second movement means (8) configured to move said second tracks (60) along said second path (6a);
- said movement means (7,8) being further configured to move said tracks (50, 60) simultaneously in a coordinated way in the same direction, at least when corresponding with said segments (s', s"); and
- said segments (s', s") being mutually opposite, so that their forming surfaces (51, 61) always interpenetrate mutually pressing and moving, in use, along said longitudinal direction (2a) by said forming surfaces (51, 61), said strip (2') introduced between said die (5) and counterdie (6), thus producing said panel (1).
- wherein said first movement means (7) comprise a first transport mechanism (70) defining said first path (5a) and a plurality of first driving elements (71), operatively connected to said first transport mechanism (70) for said first path (5a), each element being weakly constrained to a corresponding first track (50), and wherein said second movement means (8) comprise a second transport mechanism (80) defining said second path (6a) and a plurality of second driving elements (81), operatively connected to said second transport mechanism (80) for said second path (6a), each element being labile constrained to a corresponding second track (60);
said apparatus (4) for forming a panel (1) being **characterized in that** said die (5) comprises a first external guide (53) extending parallel to said first path (5a) outwardly of said first path (5a) and each said first track (50) comprises a first external slider (50a) labile constrained to said first external guide (53) and moving along said first external guide (53), and wherein said counterdie (6) comprises a second external guide (63) extending parallel to said second path (6a) and each said second track (60) comprises a second external slider (60a) labile constrained to said second external guide (63) and moving along said second external guide (63).

2. Apparatus (4) according to any of the preceding claims, wherein said paths (5a, 6a) are closed.

3. Apparatus (4) according to claim 2, wherein said first transport mechanism (70) comprises two rotary and mutually spaced first gear wheels (70a) and a first belt (70b) driven around by said first gear wheels (70a) thus defining said first path (5a), and said second transport mechanism (80) comprises two rotary and mutually spaced second gear wheels (80a) and a second belt (80b) driven around by said second gear wheels (80a) thus defining said second path (6a), said gear wheels (70a, 80a) rotating in the same direction at the same speed.

4. Apparatus (4) according to claim 3, wherein each of said belts (70a, 80a) comprise a chain provided with pins and links, each first driving element (71) being labile constrained to a corresponding pin of said firs belt (70a) by a hinge, and each second driving element (81) being labile constrained to a corresponding pin of said second belt (80b) by a hinge.

5. Apparatus (4) according to at least claim 2, wherein said die (5) comprises a first internal guide (52) extending parallel to said first path (5a) inside the same first path (5a), and each said first driving element (71) comprises a first internal slider (71a) labile constrained to said first internal guide (52) and moving along said first internal guide (52), and wherein said counterdie (6) comprises a second internal guide (62) extending parallel to said second path (6a) inside the same second path (6a), and each said second driving element (81) comprises a second internal slider (81a) labile constrained to said second internal guide (62) and moving along said second internal guide (62).

6. Apparatus (4) according to claims 3 and 5, wherein each said first driving element (71) defines a boomerang shape, said first internal slider (71a) is arranged at a free end of said boomerang, said first driving element (71) is labile constrained to a corresponding first track (50) at the other free end of said boomerang by means of a hinge, and said first driving element (71) is labile constrained to said first belt (70b) at the intermediate corner of said boomerang, and wherein each said second driving element (81) defines a boomerang shape, said second internal slider (81a) is arranged at a free end of said boomerang, said second driving element (81) is labile constrained to z corresponding second track (60) at the other free end of said boomerang by means of a hinge, and said second driving element (81) is labile constrained to said second belt (80b) at the intermediate corned of said boomerang.

7. Apparatus (4) according to at least claim 3, comprising motor means (9) including one or more electric rotary motors, operatively connected at least to a first gear (70a) and a second gear (80a), and configured to rotate together or individually said first gear (70a) and said second gear (80a).

8. Method of forming a panel (1) made by an apparatus according to any preceding claims, and comprising the steps of:
- introducing said strip (2') between said die (5) and said counterdie (6) along a longitudinal direction (2a) until contacting said forming surfaces (51, 61);
- actuating said first tracks (50) and said second tracks (60) simultaneously and coordinately, so as to actuate in turn said strip (2') along said longitudinal direction (2a), and to press said strip (2') between said forming surfaces (51, 61), so as to form said strip (2') and produce said panel (1).

## Patentansprüche

1. Vorrichtung (4) zum Formen einer Platte (1), die auf die Aufnahme eines flachen Streifens (2') in Längsrichtung (2a) ausgelegt ist und Folgendes umfasst:
- eine Matrize (5) mit einer Vielzahl von ersten Schienen (50), die entlang eines ersten Weges (5a) beweglich und so nacheinander angeordnet sind, dass mindestens an einem ersten Abschnitt (s') des genannten ersten Weges (5a) mindestens eine erste Formfläche (51) parallel zur genannten Längsrichtung (2a) entsteht;
- eine Gegenmatrize (6) mit einer Vielzahl von zweiten Schienen (60), die entlang eines zweiten Weges (6a) beweglich und so nacheinander angeordnet sind, dass eine zweite Formfläche (61) entsteht, die mit der genannten ersten Formfläche (51) zumindest an einem zweiten Abschnitt (s") des genannten zweiten Weges (6a) parallel zur genannten Längsrichtung (2a) gegengeformt ist;
- erste Bewegungsmittel (7), die darauf ausgelegt sind, die genannten ersten Schienen (50) entlang dem genannten ersten Weg (5a) zu bewegen; und
- zweite Bewegungsmittel (8), die darauf ausgelegt sind, die genannten zweiten Schienen (60) entlang dem genannten zweiten Weg (6a) zu bewegen;
- wobei die genannten Bewegungsmittel (7, 8) ferner darauf ausgelegt sind, die genannten Schienen (50, 60) gleichzeitig in koordinierter Weise in dieselbe Richtung zu bewegen, zumindest wenn sie mit den genannten Abschnitten (s', s") übereinstimmen; und
- die genannten Abschnitte (s', s",) einander gegenüberliegend angeordnet sind, sodass ihre Formflächen (51, 61) stets aneinanderdrückend ineinandergreifen und sich im Gebrauch entlang der genannten Längsrichtung (2a) mittels der genannten Formflächen (51, 61) bewegen, wobei der genannte Streifen (2') zwischen die genannte Matrize (5) und die genannte Gegenmatrize (6) eingeführt wird und so die genannte Platte (1) entsteht.
- wobei die genannten ersten Bewegungsmittel (7) einen ersten Transportmechanismus (70) umfassen, der den genannten ersten Weg (5a) festlegt, und eine Vielzahl von ersten Antriebselementen (71), die funktional mit dem genannten ersten Transportmechanismus (70) für den genannten ersten Weg (5a) verbunden sind, wobei jedes Element schwach an einer entsprechenden ersten Schiene (50) befestigt ist, und wobei die genannten zweiten Bewegungsmittel (8) einen zweiten Transportmechanismus (80) umfassen, der den genannten zweiten Weg (6a) festlegt, und eine Vielzahl von zweiten Antriebselementen (81), die funktional mit dem genannten zweiten Transportmechanismus (80) für den genannten zweiten Weg (6a) verbunden sind, wobei jedes Element beweglich an einer entsprechenden zweiten Schiene (60) befestigt ist;
die genannte Vorrichtung (4) zum Formen einer Platte (1) ist **dadurch gekennzeichnet, dass** die genannte Matrize (5) eine erste äußere Führung (53) umfasst, die sich parallel zum genannten ersten Weg (5a) außerhalb des genannten ersten Wegs (5a) erstreckt, und jede der genannten ersten Schienen (50) einen ersten äußeren Schieber (50a) umfasst, der beweglich an der genannten ersten äußeren Führung (53) befestigt ist und sich entlang der genannten ersten äußeren Führung (53) bewegt, und wobei die genannte Gegenmatrize (6) eine zweite äußere Führung (63) umfasst, die sich parallel zum genannten zweiten Weg (6a) erstreckt, und jede der genannten zweiten Schienen (60) einen zweiten äußeren Schieber (60a) umfasst, der beweglich an der genannten zweiten äußeren Führung (63) befestigt ist und sich entlang der genannten zweiten äußeren Führung (63) bewegt.

2. Vorrichtung (4) nach einem der vorhergehenden Ansprüche, wobei die genannten Wege (5a, 6a) geschlossen sind.

3. Vorrichtung (4) nach Anspruch 2, wobei der genannte erste Transportmechanismus (70) zwei drehbare und voneinander beabstandete erste Zahnräder (70a) und einen ersten Riemen (70b) umfasst, der von den genannten ersten Zahnrädern (70a) angetrieben wird und dadurch den genannten ersten Weg (5a) bildet, und wobei der genannte zweite Transportmechanismus (80) zwei drehbare und voneinander beabstandete zweite Zahnräder (80a) und einen zweiten Riemen (80b) umfasst, der von den genannten zweiten Zahnrädern (80a) angetrieben wird und dadurch den genannten zweiten Weg (6a) bildet, wobei sich die genannten Zahnräder (70a, 80a) in derselben Richtung und mit derselben Geschwindigkeit drehen.

4. Vorrichtung (4) nach Anspruch 3, wobei jeder der genannten Riemen (70a, 80a) eine mit Stiften und Gliedern versehene Kette umfasst und jedes erste Antriebselement (71) durch ein Gelenk beweglich an einem entsprechenden Stift des genannten ersten Riemens (70a) befestigt ist und jedes zweite Antriebselement (81) durch ein Gelenk beweglich an einem entsprechenden Stift des genannten zweiten Riemens (80b) befestigt ist.

5. Vorrichtung (4) nach zumindest Anspruch 2, wobei die genannte Matrize (5) eine erste innere Führung (52) umfasst, die sich parallel zu dem genannten ersten Weg (5a) innerhalb desselben ersten Weges (5a) erstreckt, und jedes der genannten ersten Antriebselemente (71) einen ersten inneren Schieber (71a) umfasst, der beweglich an der genannten ersten inneren Führung (52) befestigt ist und sich entlang der genannten ersten inneren Führung (52) bewegt, und wobei die genannte Gegenmatrize (6) eine zweite innere Führung (62) umfasst, die sich parallel zu dem genannten zweiten Weg (6a) innerhalb desselben zweiten Weges (6a) erstreckt, und jedes der genannten zweiten Antriebselemente (81) einen zweiten inneren Schieber (81a) umfasst, der beweglich an der genannten zweiten inneren Führung (62) befestigt ist und sich entlang der genannten zweiten inneren Führung (62) bewegt.

6. Vorrichtung (4) nach den Ansprüchen 3 und 5, wobei jedes genannte erste Antriebselement (71) einen Bumerang formt, der genannte erste innere Schieber (71a) an einem freien Ende des genannten Bumerangs angeordnet ist, das genannte erste Antriebselement (71) mittels eines Gelenks beweglich an einer entsprechenden ersten Schiene (50) am anderen freien Ende des genannten Bumerangs befestigt ist und das genannte erste Antriebselement (71) an der mittleren Ecke des genannten Bumerangs beweglich am genannten ersten Riemen (70b) befestigt ist, und wobei jedes genannte zweite Antriebselement (81) einen Bumerang formt, der genannte zweite innere Schieber (81a) an einem freien Ende des genannten Bumerangs angeordnet ist, das genannte zweite Antriebselement (81) mittels eines Gelenks beweglich an der entsprechenden zweiten Schiene (60) am anderen freien Ende des genannten Bumerangs befestigt ist und das genannte zweite Antriebselement (81) an der mittleren Ecke des genannten Bumerangs beweglich an dem genannten zweiten Riemen (80b) befestigt ist.

7. Vorrichtung (4) nach mindestens Anspruch 3, die eine Motoreinrichtung (9) mit einem oder mehreren elektrischen Drehstrommotoren umfasst, die funktionsfähig mindestens mit einem ersten Zahnrad (70a) und einem zweiten Zahnrad (80a) verbunden und darauf ausgelegt sind, das genannte erste Zahnrad (70a) und das genannte zweite Zahnrad (80a) gemeinsam oder einzeln zu drehen.

8. Verfahren zum Formen einer Platte (1) mittels einer Vorrichtung nach einem der vorhergehenden Ansprüche, das die folgenden Schritte umfasst:
- Einführen des genannten Streifens (2') zwischen der genannten Matrize (5) und der genannten Gegenmatrize (6) in Längsrichtung (2a) bis zum Kontakt mit den genannten Formflächen (51, 61);
- gleichzeitiges und koordiniertes Betätigen der genannten ersten Schienen (50) und der genannten zweiten Schienen (60), um den genannten Streifen (2') nacheinander in der genannten Längsrichtung (2a) zu bewegen und den genannten Streifen (2') zwischen den genannten Formflächen (51, 61) einzupressen, um den genannten Streifen (2') zu formen und die genannte Platte (1) herzustellen.

## Revendications

1. Appareil (4) de formation d'un panneau (1) et conçu pour recevoir une bande plate (2') le long d'une direction longitudinale (2a), comprenant :
- un moule (5) incluant une pluralité de premières voies (50) mobiles le long d'un premier parcours (5a) et agencées de façon consécutive de manière à réaliser au moins une première surface de formation (51) au moins au niveau d'un premier segment (s') dudit premier parcours (5a) parallèle à ladite direction longitudinale (2a) ;
- un contre-moule (6) incluant une pluralité de secondes voies (60) mobiles le long d'un second parcours (6a) et agencées de façon consécutive de manière à réaliser une seconde surface de formation (61) en contre-forme par rapport à ladite première surface de formation (51) au moins au niveau d'un second segment (s") dudit second parcours (6a) parallèle à ladite direction longitudinale (2a) ;
- des premiers moyens de mouvement (7) configurés pour déplacer lesdites premières voies (50) le long dudit premier parcours (5a) ; et
- des seconds moyens de mouvement (8) configurés pour déplacer lesdites secondes voies (60) le long dudit second parcours (6a) ;
- lesdits moyens de mouvement (7,8) étant en outre configurés pour déplacer lesdites voies (50, 60) simultanément, de manière coordonnée, dans la même direction, au moins lorsqu'elles correspondent auxdits segments (s', s") ; et
- lesdits segments (s', s") étant mutuellement opposés, de façon à ce que leurs surfaces de formation (51, 61) se compénètrent toujours mutuellement en pressant et en se déplaçant, pendant l'utilisation, le long de ladite direction longitudinale (2a) par le biais desdites surfaces de formation (51, 61), ladite bande (2') étant introduite entre lesdits moule (5) et contre-moule (6), produisant ainsi ledit panneau (1).
- dans lequel lesdits premiers moyens de mouvement (7) comprennent un premier mécanisme de transport (70) définissant ledit premier parcours (5a) et une pluralité de premiers éléments d'entraînement (71), reliés fonctionnellement audit premier mécanisme de transport (70) pour ledit premier parcours (5a), chaque élément étant contraint faiblement à une première voie correspondante (50), et dans lequel lesdits seconds moyens de mouvement (8) comprennent un second mécanisme de transport (80) définissant ledit second parcours (6a) et une pluralité de seconds éléments d'entraînement (81), reliés fonctionnellement audit second mécanisme de transport (80) pour ledit second parcours (6a), chaque élément étant contraint de manière labile à une seconde voie correspondante (60) ;
ledit appareil (4) de formation d'un panneau (1) étant **caractérisé en ce que** ledit moule (5) comprend un premier guide externe (53) s'étendant parallèlement audit premier parcours (5a) à l'extérieur dudit premier parcours (5a) et chaque première voie (50) comprend un premier coulisseau externe (50a) contraint de manière labile audit premier guide externe (53) et se déplaçant le long dudit premier guide externe (53), et dans lequel ledit contre-moule (6) comprend un second guide externe (63) s'étendant parallèlement audit second parcours (6a) et chaque seconde voie (60) comprend un second coulisseau externe (60a) contraint de manière labile audit second guide externe (63) et se déplaçant le long dudit second guide externe (63).

2. Appareil (4) selon l'une quelconque des revendications précédentes, dans lequel lesdits parcours (5a, 6a) sont fermés.

3. Appareil (4) selon la revendication 2, dans lequel ledit premier mécanisme de transport (70) comprend deux premières roues dentées (70a) tournantes et mutuellement espacées et une première courroie (70b) entraînée par lesdites premières roues dentées (70a) définissant ainsi ledit premier parcours (5a), et ledit second mécanisme de transport (80) comprend deux secondes roues dentées (80a) tournantes et mutuellement espacées et une seconde courroie (80b) entraînée par lesdites secondes roues dentées (80a) définissant ainsi ledit second parcours (6a), lesdites roues dentées (70a, 80a) tournant dans la même direction à la même vitesse.

4. Appareil (4) selon la revendication 3, dans lequel chacune desdites courroies (70a, 80a) comprend une chaîne munie de picots et de maillons, chaque premier élément d'entraînement (71) étant contraint de manière labile à un picot correspondant de ladite première courroie (70a) par le biais d'une charnière, et chaque second élément d'entraînement (81) étant contraint de manière labile à un picot correspondant de ladite seconde courroie (80b) par le biais d'une charnière.

5. Appareil (4) selon au moins la revendication 2, dans lequel ledit moule (5) comprend un premier guide interne (52) s'étendant parallèlement audit premier parcours (5a) à l'intérieur du même premier parcours (5a), et chaque premier élément d'entraînement (71) comprend un premier coulisseau interne (71a) contraint de manière labile audit premier guide interne (52) et se déplaçant le long dudit premier guide interne (52), et dans lequel ledit contre-moule (6) comprend un second guide interne (62) s'étendant parallèlement audit second parcours (6a) à l'intérieur du même second parcours (6a), et chaque second élément d'entraînement (81) comprend un second coulisseau interne (81a) contraint de manière labile audit second guide interne (62) et se déplaçant le long dudit second guide interne (62).

6. Appareil (4) selon les revendications 3 et 5, dans lequel chaque premier élément d'entraînement (71) définit une forme de boomerang, ledit premier coulisseau interne (71a) est agencé à une extrémité libre dudit boomerang, ledit premier élément d'entraînement (71) est contraint de manière labile à une première voie correspondante (50) à l'autre extrémité libre dudit boomerang au moyen d'une charnière, et ledit premier élément d'entraînement (71) est contraint de manière labile à ladite première courroie (70b) au niveau du coin intermédiaire dudit boomerang, et dans lequel chaque second élément d'entraînement (81) définit une forme de boomerang, ledit second coulisseau interne (81a) est agencé à une extrémité libre dudit boomerang, ledit second élément d'entraînement (81) est contraint de manière labile à une seconde voie correspondante (60) à l'autre extrémité libre dudit boomerang au moyen d'une charnière, et ledit second élément d'entraînement (81) est contraint de manière labile à ladite seconde courroie (80b) au niveau du coin intermédiaire dudit boomerang.

7. Appareil (4) selon au moins la revendication 3, comprenant des moyens moteurs (9) incluant un ou plusieurs moteurs rotatifs électriques, reliés fonctionnellement au moins à une première roue (70a) et à une seconde roue (80a), et configurés pour faire tourner ensemble ou individuellement ladite première roue (70a) et ladite seconde roue (80a).

8. Procédé de formation d'un panneau (1) réalisé à l'aide d'un appareil selon l'une quelconque des revendications précédentes, et comprenant les étapes consistant à :
- introduire ladite bande (2') entre ledit moule (5) et ledit contre-moule (6) le long d'une direction longitudinale (2a) jusqu'à ce qu'elle entre en contact avec lesdites surfaces de formation (51, 61) ;
- actionner lesdites premières voies (50) et lesdites secondes voies (60) simultanément et de façon coordonnée, de manière à actionner à tour de rôle ladite bande (2') le long de ladite direction longitudinale (2a), et presser ladite bande (2') entre lesdites surfaces de formation (51, 61), de façon à former ladite bande (2') et produire ledit panneau (1).
